# FASCICULE DE BREVET EUROPEEN

(11) **EP 2 364 278 B1**
(45) Date de publication et mention de la délivrance du brevet: **02.01.2013**
(21) Numéro de dépôt: 09751945.8
(22) Date de dépôt: 17.11.2009
(51) Int. Cl.: C03C 8/14, C23C 4/10, C23C 28/00

(54) **PROCEDE DE REVETEMENT D'UN ELEMENT DE CREUSET METALLIQUE PAR UN MELANGE DE VERRE ET DE CERAMIQUE**
VERFAHREN ZUM BESCHICHTEN EINES METALLTIEGELELEMENTS MIT EINER MISCHUNG AUS GLAS UND KERAMIK
METHOD FOR COATING A METAL CRUCIBLE MEMBER WITH A GLASS AND CERAMIC MIXTURE

(30) Priorité: 19.11.2008 FR 0857860
(43) Date de publication de la demande: 14.09.2011
(73) Titulaire: Areva NC, 75009 Paris (FR)
(72) Inventeur: BRUN, Patrice, F-30200 Saint Michel D'euzet (FR); BERARD, Geoffroy, F-59258 Crevecoeur Sur L'escaut (FR); LACOMBE, Jacques, F-30131 Pujaut (FR)
(74) Mandataire: Ilgart, Jean-Christophe
(86) Numéro de dépôt international: PCT/EP2009/065336
(87) Numéro de publication internationale: WO 2010/057894

(56) Documents cités:
- WO-A1-02/18128
- WO-A2-03/067166
- US-A1- 2005 056 055
- ZHANG, T ET AL: "Temperature Profiles and Thermal Stress Analysis of Plasma Sprayed Glass-Composite Coatings" PROCEEDINGS OF THE INTERNATIONAL THERMAL SPRAY CONFERENCE, 2000, pages 1-2, XP002531505 cité dans la demande
- BOLELLI ET AL: "BAS, CMAS and CZAS glass coatings deposited by plasma spraying" JOURNAL OF THE EUROPEAN CERAMIC SOCIETY, ELSEVIER SCIENCE PUBLISHERS, BARKING, ESSEX, GB LNKD- DOI:10.1016/J.JEURCERAMSOC.2007.03.032, vol. 27, no. 16, 15 octobre 2007 (2007-10-15), pages 4575-4588, XP022282226 ISSN: 0955-2219

## Description

Le sujet de cette invention est un procédé de revêtement d'un creuset métallique, ainsi qu'un élément d'un tel creuset.

Elle a été conçue avant tout pour les creusets utilisés dans les procédés de vitrification à chauffage par induction à haute température de la charge du creuset où le creuset est refroidi. De tels creusets sont utilisés pour élaborer des verres à partir d'oxydes, incinérer des déchets organiques nucléaires à faible et moyenne activité sur un bain de verre en fusion, et vitrifier des déchets nucléaires ou des effluents liquides nucléaires à haute, moyenne et faible activité. Les creusets sont placés sur une sole en béton réfractaire et placés dans un champ magnétique produit par un inducteur où circule un courant électrique à haute fréquence qui crée l'échauffement de la charge des creusets. La paroi cylindrique des creusets, avantageusement métallique, est soumise à des échauffements importants à cause de la charge fondue qu'elle englobe et des dégagements dus aux courants induits dont elle est le siège. C'est pourquoi un circuit de refroidissement est percé dans la paroi du creuset. Toutefois, les courants induits dans la paroi doivent être limités non seulement pour réduire l'échauffement mais aussi pour augmenter le couplage électromagnétique direct entre l'inducteur et le contenu du creuset. La paroi est alors constituée de l'assemblage de secteurs verticaux assemblés par leur face transversale à la façon des douves d'un tonneau, avec un isolant électrique entre chaque paire d'éléments adjacents. Cet isolant électrique est généralement du mica. Les secteurs du creuset sont assemblés généralement en les soudant les uns aux autres en partie haute, au-dessus de l'inducteur, ou en les vissant sur une bride supérieure ; ils peuvent aussi être maintenus par un bandage à la périphérie externe, avec du tissu de verre imprégné d'élastomère ou avec de la résine époxy.

### ART ANTERIEUR

Le document FR-A-2 835 601 apprend que la protection d'isolation électrique peut être renforcée en déposant un revêtement de céramique sur au moins une partie de la surface du creuset, comme la face intérieure ou les faces latérales des secteurs. Les céramiques sont des éléments réfractaires à structure cristalline, fondant à une température supérieure à celle du métal du creuset. Le service du creuset est alors satisfaisant dans la plupart des cas malgré les conditions difficiles de température élevée et d'atmosphère souvent très corrosive. Néanmoins, certaines circonstances de mise en oeuvre du procédé présentent des difficultés. Ceci est notamment le cas lorsqu'une quantité importante de liquide (acides, eau, déchets liquides) séjourne à la surface du bain de verre, comme à l'arrivée d'effluents liquides dans la charge à vitrifier, alors que le refroidissement des secteurs assure en général la conservation d'une couche solidifiée de la charge au contact de la paroi du creuset, qui est non seulement moins chaude que le reste de la charge mais moins agressive. Or les revêtements de céramique sont poreux dès la fabrication et soumis ensuite à une fissuration voire des faïençages par les chocs thermiques qu'ils subissent. Cette porosité permet aux gaz produits à la vitrification et surtout aux liquides occasionnellement présents en gros volumes au-dessus du verre de percoler dans la couche de céramique, ce qui entraîne d'une part une diminution de la rigidité électrique de la couche et d'autre part, éventuellement, la corrosion du substrat qu'elle revêt. La couche de céramique peut même s'écailler jusqu'à disparaître.

L'accroissement de l'épaisseur de la couche de céramique augmente sa porosité ouverte et sa rigidité diélectrique, mais ne convient pas ici à cause des gradients de température élevés rencontrés entre la charge et les secteurs refroidis et des différences de dilatation thermique correspondantes, notamment le long des secteurs en direction verticale, qui détruiraient des couches de céramique épaisses.

On s'est aussi intéressé aux revêtements composés d'un mélange de verre et de céramique, au lieu de céramique pure. On espérait profiter de la température de fusion plus basse du verre pour combler les interstices de la céramique et diminuer donc sa porosité pendant la projection, voire pour diminuer encore cette porosité par un traitement ultérieur de recuit de la pièce en rendant le verre visqueux ; on espérait aussi profiter de son coefficient de dilatation plus élevé que celui de la céramique pour rapprocher le coefficient de dilatation global du revêtement de celui, plus élevé, du substrat.

Des travaux antérieurs à l'invention, confirmés par ceux des auteurs de celle-ci, ont toutefois démontré que l'objectif de réduction de la porosité était difficile à atteindre.

Les travaux de Manfredini (« Glass-alumina composite coatings by plasma spraying, Part I : microstructural and mechanical characterization », Surface & Coating Technology [2005]), menés d'ailleurs pour des substrats en céramique, ont ainsi démontré que le traitement thermique de 1000°C supposé réarranger la structure du revêtement par l'infiltration du verre devenu visqueux était en réalité sans effet sur la porosité du revêtement et sa résistance mécanique, et pouvait même devenir nuisible. Des raisons seraient une transformation de phase de la céramique (alumine), qui se contracte d'une phase métastable gamma à une phase stable alpha par des états intermédiaires métastables delta et kappa, et de la dilatation des bulles d'air emprisonnées dans le revêtement. Un abaissement de la résistance mécanique du revêtement a été aussi constaté, sauf pour les teneurs de 80% d'alumine et 20% de verre environ.

L'application de tels procédés de traitement thermique à des revêtements identiques mais déposés sur des substrats en acier inoxydable pourrait aussi avoir d'autres effets nuisibles, ainsi que les inventeurs l'ont constaté, à savoir une oxydation du substrat par une réaction chimique d'oxydo-réduction avec le verre, par laquelle le fer du substrat s'oxyde et le verre se décompose par une réduction de certains de ses oxydes, avec des conséquences catastrophiques sur la cohésion et la résistance du revêtement.

On peut aussi citer les travaux de Zhang (« Température profiles and thermal stress analysis of plasma sprayed glass-composite coatings », Thermal spray : surface engineering via applied research, édité par C. Berndt, ASM thermal spray society, German Welding Society (DUS) and International Institute of Welding (IIW), ISBN 0-87170-680-6, SAN : 204-7986 (2000), 355-361), qui enseignent que les contraintes internes au revêtement composite peuvent être relâchées en sélectionnant un verre avec une faible température de transition vitreuse et un coefficient de dilatation linéique élevé. On considère des verres ayant une température de transition vitreuse inférieure à 500°C. Les effets sur la porosité du revêtement ne sont toutefois pas mentionnés, et les inventeurs ont pu établir qu'il n'y en avait pas en reproduisant ces essais, et que la structure micrographique du revêtement n'était pas modifiée de façon appréciable.

Le document US-A-2004/0023078 décrit un revêtement abrasif composé de particules dures enrobées dans une matrice amorphe. Le revêtement est projeté par plasma soumis à un traitement thermique à température élevée, de 1300° par exemple.

Le document WO-A-02/18128 décrit un revêtement composite en matière vitreuse et en matière cristalline, où la cristallisation est produite après un traitement thermique.de 1100°C à 1200°C au moins.

### EXPOSE DE L'INVENTION

Un objet de l'invention est donc de proposer un revêtement de secteurs métalliques d'une paroi de creuset refroidie satisfaisant aux exigences habituelles de tenue diélectrique et de résistance à la corrosion et à la température mais qui ne comporte pas l'inconvénient d'une porosité ouverte excessive favorisant la percolation de liquides présents sur la charge fondue.

Ce revêtement doit par ailleurs résister aux corps chimiques rencontrés, comme des nitrates, des chlorures, des sulfates, des molybdates, etc. en fonction des déchets traités. Dans les applications courantes de déchets radioactifs, il doit aussi résister à leur rayonnement. Enfin, il doit évidemment être compatible physiquement et chimiquement avec le substrat qu'il revêt, c'est-à-dire qu'il doit parvenir à y adhérer, posséder une dilatation thermique pas trop différente et ne pas réagir avec lui.

Les revêtements traditionnels dans ce domaine technique des fours à induction sont en céramique et notamment en alumine, mullite, alumine-rutile ou autres. Le mode d'application de ces revêtements est généralement la projection par plasma. La couche élaborée par projection plasma présente une porosité ouverte interconnectée dans tout son volume.

L'invention concerne sous sa forme la plus générale un procédé de revêtement de secteurs d'un creuset de vitrification, les secteurs étant en acier, caractérisé en ce qu'il consiste à appliquer un mélange de verre et de céramique sur les secteurs, et à soumettre le mélange à un traitement thermique, le mélange ayant une composition en masse de 50% à 70% de verre ayant une température de transition vitreuse inférieure à 650°C, et de 30% à 50% de céramique, et le traitement thermique étant mené à une température maximale qui est supérieure à une température d'écoulement du mélange, et comprise entre 650°C et 850°C.

L'invention réside donc dans la combinaison d'une composition particulière du revêtement et d'une température de traitement thermique basse, mais associée à un verre dont la température de transition vitreuse l'est encore plus.

La porosité ouverte interconnectée dans tout le volume du revêtement après projection par plasma est totalement éliminée par le traitement thermique. Celui-ci rend le verre visqueux et densifie l'architecture poreuse du revêtement. Toutefois, le revêtement n'est pas dense car il présentera une porosité fermée due à la dilatation de l'air piégé dans le revêtement. Cette porosité n'est pas gênante car elle est localisée dans le revêtement et ne permet pas la percolation d'espèces chimiques et ne nuit pas aux propriétés mécaniques, si bien sûr elle reste contrôlée.

Une composition en masse de mélange de 30% de céramique et 70% de verre a donné de bons résultats.

Sous un premier aspect, l'invention concerne la composition du revêtement. Le verre a une proportion massique comprise entre 50% et 70% environ, le complément étant de la céramique. La céramique apporte la résistance mécanique au revêtement, et le verre la faculté à résister aux délaminations ou écaillages produits par les différences de dilatation thermique. Avec des répartitions différentes, notamment à parts égales du verre et de la céramique, la résistance à la délamination serait trop faible, notamment aux bords de la pièce revêtue, ce qu'on peut expliquer par une inhomogénéité de la microstructure du revêtement. Avec une part de céramique plus importante, le revêtement aurait une structure lamellaire formée essentiellement de couches alternées de verre et de céramique dont la cohérence serait faible. Avec les proportions de l'invention, le revêtement prend la forme d'une matrice vitreuse continue entourant des grains isolés de céramique. La matrice vitreuse donne la cohésion recherchée au revêtement et les grains de céramique permettent encore d'arrêter les microfissures qui se développent dans la matrice par suite des sollicitations subies par le revêtement, ce qui assure la résistance mécanique recherchée.

Sous un deuxième aspect, l'invention concerne le traitement thermique appliqué au revêtement. Les travaux de l'art antérieur, menés avec des traitements thermiques élevés (proches de 1000°C), ne permettent pas de diminuer la porosité du revêtement. Les inventeurs ont toutefois mis en évidence des plages de température permettant d'atteindre cet objectif et qui dépendent des conditions suivantes.
a) Il faut tout d'abord rendre le mélange visqueux pour obtenir l'infiltration du verre dans les pores du revêtement. Cela est obtenu à une température d'écoulement du mélange quelque peu supérieure à la température de transition vitreuse du verre, en raison de la présence de la céramique dans le mélange, et qui peut être trouvée en observant la température à laquelle une goutte de mélange s'étale.
b) L'oxydation du substrat doit ensuite être évitée, ce qui impose des températures de traitement thermique restant modérées à l'interface entre le revêtement et le substrat.
c) La température doit aussi rester modérée dans le revêtement lui-même, pour éviter de créer une porosité supplémentaire par la dilatation des bulles d'air emprisonnées dans le revêtement et les changements d'état de la céramique.

Les essais ont démontré que l'oxydation de l'acier considéré par les verres commençait à 550°C environ mais que sa progression était beaucoup plus rapide à 650°C et au-dessus. Des échauffements à l'interface entre le revêtement et le substrat au-dessus de cette température de 650°C environ peuvent donc être tolérés seulement s'ils sont brefs, les échauffements à une température inférieure étant préférables.

Un genre satisfaisant de traitement thermique comprend une glaçure à une température relativement élevée comprise vers le haut de l'étendue de températures indiquée, suivie d'une trempe à l'air et d'un recuit situé vers le bas de cette étendue, voire à une température nettement inférieure. La glaçure opère une fusion de la surface libre du revêtement, et le recuit améliore le fond du revêtement avec l'objectif de ne pas oxyder le substrat tout en résolvant les contraintes internes. La glaçure est brève, durant quelques minutes et au plus 15 minutes environ ; elle peut être menée entre 750°C et 850°C environ.

Dans le cas où une glaçure est opérée, une partie de la chaleur apportée au revêtement servira aussi à échauffer le fond de celui-ci, de sorte que le recuit peut être mené sous la température de 650°C, voire sous 500°C par exemple, c'est-à-dire proche de la température de transition vitreuse du verre. Cette étape de recuit dure au moins 1 heure, et éventuellement beaucoup plus.

Un autre genre de traitement thermique satisfaisant est analogue à un recuit par sa durée, mais il est entrepris seul sans étape de glaçure, et à une température supérieure à celle que l'on envisage ici pour le recuit, plus précisément dans une étendue de températures comprises entre 650°C et 750°C environ. La corrosion du substrat étant alors à redouter, il convient de procéder sous une atmosphère inerte.

On constate que l'invention a été conçue en résolvant, entre autres, la contradiction de devoir chauffer en surface le revêtement à une température à laquelle le substrat s'oxyderait rapidement.

### EXEMPLES DE REALISATION

I)
   1°) On a été amené ainsi à choisir des verres dont la température de transition vitreuse Tg est inférieure à 650°C environ, et de préférence à 500°C environ, pour entrer dans les revêtements envisagés ici, ce qui donne plus de latitude dans le choix du traitement thermique et donc plus facilement de bons résultats.
   2°) Les traitements thermiques qui sont alors à envisager respectent les conditions ci-dessous.
      a) Un premier de ces traitements thermiques comprend une glaçure, c'est-à-dire un échauffement fort et bref, pour obtenir la fusion de la surface ou de la totalité du volume du revêtement, suivie d'une trempe à l'air. Afin de relâcher les contraintes thermiques issues de la trempe, la glaçure est poursuivie par un recuit à une température insuffisante pour produire une oxydation du substrat et qui est typiquement inférieure à 550°C pour une température de transition vitreuse à 500°C. La glaçure dure quelques minutes, et le recuit dure plusieurs heures. La glaçure est menée à une température voisine de 3/2 fois la température de transition vitreuse et qui peut être comprise entre 800°C et 850°C environ ici.
      b) Une autre possibilité consiste en un traitement thermique à palier unique à une température intermédiaire entre celle de la glaçure et du recuit du traitement précédent. Cette température intermédiaire peut être réalisée entre 650 et 700°C. Comme l'oxydation du substrat et le grossissement des bulles d'air dans le revêtement sont alors à redouter, il est préconisé de travailler dans une enceinte fermée. La réaction d'oxydo-réduction entre le substrat et le revêtement n'étant pas arrêtée complètement, ces traitements thermiques ne doivent pas être prolongés excessivement.
   3°) L'influence d'autres paramètres va maintenant être mentionnée.
      a) Les modes d'application du revêtement peuvent être le traitement par projection par plasma, l'agglomération et séchage et l'application d'un gel. Les poudres utilisées sont composées de préférence de grains homogènes, sphériques et fins (de diamètre inférieur à 45 µm environ).
      b) Les céramiques peuvent être de l'alumine, de la mullite, de l'alumine-rutile entre autres.
      c) Le verre à la température de transition vitreuse basse peut être un verre industriel ordinaire borosilicaté.
      d) Une possibilité consiste à appliquer une sous-couche sur le substrat avant de projeter la céramique. Une sous-couche peut servir à améliorer l'accrochage du revêtement au substrat. Les alliages à base de nickel composent les sous-couches classiques entre l'acier et les céramiques, mais on y a renoncé ici à cause de sa mauvaise résistance chimique aux composés nitreux. De façon surprenante, on a constaté que l'application d'une sous-couche homogène au substrat (notamment d'acier inoxydable sur de l'acier inoxydable de nuance différente) donnait de bons résultats, malgré la perte d'adaptation des coefficients de dilatation thermique, puisque la sous-couche n'a plus de coefficient de dilatation intermédiaire à ceux du substrat et du revêtement, comme les alliages de nickel. L'excellente résistance à l'accrochage est alors attribuée à la rugosité plus grande de la sous-couche que celle du substrat. La sous-couche est avantageusement projetée par plasma, comme le revêtement. Elle peut être d'une autre nuance d'acier que le substrat (respectivement 316L et 304L par exemple).
II) Quelques essais seront maintenant explicités, ceux dont les résultats sont satisfaisants représentant des modes de réalisation particuliers de l'invention. Ils ont tous été entrepris avec un mélange d'alumine à 30% en masse et de verre à 70% en masse. Le verre était un verre industriel de marque Escol présentant une température de transition vitreuse de 470°C, un coefficient de dilatation thermique de 14,47 x10⁻⁶, une granulométrie entre 32 et 45 micromètres, et une densité de 2,626 (données du fabricant). Les deux propriétés essentielles de ce verre sont une faible température de transition vitreuse et un fort coefficient de dilatation, mais sa résistance chimique aux acides les fera aussi apprécier dans des utilisations réelles. Le mélange a été appliqué sur des éprouvettes rondes de 25 millimètres de diamètre et 6 millimètres d'épaisseur en acier inoxydable 304L, un simple chanfrein à 45° est réalisé au bord (1X1mm) . La température d'écoulement du mélange, au-dessus de laquelle il peut s'étaler sous l'effet des forces de gravité et donc s'infiltrer dans des pores, est de 640°C environ.
   1°) Un premier essai satisfaisant a consisté à soumettre le revêtement à une glaçure de 800°C pendant 5 minutes suivie d'une trempe à l'air puis d'un recuit à 480°C pendant une heure, sous atmosphère oxydante. Un palier intermédiaire a été respecté. On a constaté un dépôt satisfaisant, homogène et adhérent, sur l'éprouvette à la fin du processus.
   2°) Un deuxième essai a été mené sensiblement de la même façon, mais avec une glaçure à une température un peu différente (850°C) pour la même durée de 5 minutes et sans palier intermédiaire. Après le recuit, un refroidissement de 480°C à 100°C est réalisé progressivement en une heure. L'aspect de la pièce est encore meilleur, avec une réduction encore plus grande des effets de bord.
      Des essais comparatifs analogues, mais sans le recuit, ont donné de très mauvais résultats en raison de délaminations importantes conduisant à l'enlèvement complet du revêtement près des bords de l'éprouvette, et l'augmentation importante de la rugosité ailleurs. De même, d'autres essais comparatifs, menés avec le recuit mais avec une proportion d'alumine plus grande, ont révélé des délaminations importantes aux bords à partir de 40% de poids en alumine.
   3°) Un troisième essai satisfaisant s'est déroulé sous atmosphère d'argon et a consisté à soumettre l'éprouvette et le revêtement à un traitement thermique de 700°C pendant une heure avec une montée en température de 5°C par minute. Ici aussi des essais comparatifs ont été menés. Augmenter la proportion d'alumine dans la composition du mélange donnait des écaillages encore plus marqués que dans les conditions des essais précédents. On a aussi entrepris de répéter l'essai avec un revêtement ayant la même composition mais sous atmosphère oxydante. Une altération chimique du revêtement a alors été constatée à cause de l'oxydation du substrat.

Ces trois essais principaux ont donné des revêtements de bel aspect et résistant à une tension de claquage de 1200 volts à 50 Hertz en milieu sec et humide (salin).

D'autres essais ont été menés à une température de 650°C pendant 5 heures suivis par un recuit à 480°C pendant 30 minutes. Dans tous les cas, la porosité débouchante et traversante a été diminuée, mais des réactions de substrat menant à son oxydation ainsi qu'un grossissement des bulles internes sont apparus.

## Revendications

1. Procédé de revêtement de secteurs en acier d'un creuset de vitrification, **caractérisé en ce qu'**il consiste à appliquer un mélange de verre et de céramique par projection par plasma sur l'acier des secteurs, et à soumettre le revêtement obtenu à un traitement thermique, le mélange ayant une composition en masse de 50% à 70% de verre ayant une température de transition vitreuse inférieure à 650°C, et de 30% à 50% de céramique, et le traitement thermique étant mené à une température maximale qui est supérieure à une température d'écoulement du mélange, et comprise entre 650°C et 850°C.

2. Procédé de revêtement de secteurs de creuset selon la revendication 1, **caractérisé en ce que** le traitement thermique consiste en une glaçure menée entre 750°C et 850°C pendant une durée d'au plus 15 minutes et comprend en outre un recuit mené à une température voisine de la température de transition vitreuse du verre.

3. Procédé de revêtement de secteurs de creuset selon la revendication 2, **caractérisé en ce que** le verre a une température de transition vitreuse inférieure à 500°C.

4. Procédé de revêtement de secteurs de creuset selon la revendication 1, **caractérisé en ce que** le traitement thermique comprend une étape unique menée entre 650°C et 750°C sous atmosphère inerte.

5. Procédé de revêtement de secteurs de creuset selon l'une quelconque des revendications 2 ou 3, **caractérisé en ce que** le recuit ou l'étape unique de traitement thermique dure au moins 1 heure.

6. Procédé de revêtement de secteurs de creuset selon la revendication 1, **caractérisé en ce que** la composition en masse du mélange est 30% de céramique et 70% de verre.

7. Procédé de revêtement de secteurs de creuset selon l'une quelconque des revendications 1 à 6, **caractérisé en ce qu'**il comprend l'application d'une sous-couche en acier inoxydable par projection par plasma sur le substrat avant d'appliquer le mélange de verre et de céramique.

8. Procédé de revêtement de secteurs de creuset selon l'une quelconque des revendications précédentes, **caractérisé en ce que** la céramique est choisie parmi l'alumine, la mullite et l'alumine-rutile.

## Claims

1. A method for coating steel sectors of a vitrification crucible, **characterized in that** it consists of applying a mixture of glass and ceramic by projection via a plasma on the steel of the sectors, and of subjecting the obtained coating to a heat treatment, the mixture having a mass composition of 50% to 70% of glass having a glassy transition temperature below 650°C, and of 30% to 50% of ceramic, and the heat treatment being conducted at a maximum temperature which is greater than a pour temperature of the mixture, and comprised between 650°C and 850°C.

2. The method for coating crucible sectors according to claim 1, **characterized in that** the heat treatment consists in glazing conducted between 750°C and 850°C for a duration of at most 15 minutes and further comprises annealing conducted at a temperature close to the glassy transition temperature of the glass.

3. The method for coating crucible sectors according to claim 2, **characterized in that** the glass has a glassy transition temperature below 500°C.

4. The method for coating crucible sector according to claim 1, **characterized in that** the heat treatment comprises a single step conducted between 650°C and 750°C under an inert atmosphere.

5. The method for coating crucible sectors according to any of claims 2 or 3, **characterized in that** the annealing or the single heat treatment step lasts for at least one hour.

6. The method for coating crucible sectors according to claim 1, **characterized in that** the mass composition of the mixture is 30% ceramic and 70% glass.

7. The method for coating crucible sectors according to any of claims 1 to 6, **characterized in that** it comprises the application of a stainless steel sublayer by projection via a plasma on the substrate before applying the glass and ceramic mixture.

8. The method for coating crucible sectors according to any of the preceding claims, **characterized in that** the ceramic is selected from alumina, mullite and alumina-rutile.

## Patentansprüche

1. Verfahren zur Beschichtung von Bereichen aus Stahl eines Vitrifizierungstiegels, **dadurch gekennzeichnet, dass** es darin besteht, eine Mischung aus Glas und aus Keramik durch Plasmaspritzen auf den Stahl der Bereiche aufzubringen und die erhaltene Beschichtung einer Wärmebehandlung zu unterziehen, wobei die Mischung sich massenanteilig aus 50 % bis 70 % an Glas mit einer Glasübergangstemperatur von weniger als 650 °C und zu 30 % bis 50 % aus Keramik zusammensetzt, und wobei die Wärmebehandlung bei einer Höchsttemperatur durchgeführt wird, die höher als eine Fließtemperatur der Mischung ist und im Bereich von 650 °C bis 850 °C liegt.

2. Verfahren zur Beschichtung von Tiegelbereichen nach Anspruch 1, **dadurch gekennzeichnet, dass** die Wärmebehandlung in einer Glasur besteht, die während einer Dauer von höchstens 15 Minuten zwischen 750 °C und 850 °C durchgeführt wird und darüber hinaus ein Glühen umfasst, das bei einer Temperatur in der Nähe der Glasübergangstemperatur des Glases durchgeführt wird.

3. Verfahren zur Beschichtung von Tiegelbereichen nach Anspruch 2, **dadurch gekennzeichnet, dass** das Glas eine Glasübergangstemperatur von weniger als 500 °C hat.

4. Verfahren zur Beschichtung von Tiegelbereichen nach Anspruch 1, **dadurch gekennzeichnet, dass** die Wärmebehandlung einen einzigen Schritt umfasst, der zwischen 650 °C und 750 °C unter Inertgasatmosphäre durchgeführt wird.

5. Verfahren zur Beschichtung von Tiegelbereichen nach einem beliebigen der Ansprüche 2 oder 3, **dadurch gekennzeichnet, dass** das Glühen oder der einzige Schritt der Wärmebehandlung mindestens 1 Stunde dauert.

6. Verfahren zur Beschichtung von Tiegelbereichen nach Anspruch 1, dadurch gekenntzeichnet, dass sich die Mischung massenanteilig zu 30 % aus Keramik und zu 70 % aus Glas zusammensetzt.

7. Verfahren zur Beschichtung von Tiegelbereichen nach einem beliebigen der Ansprüche 1 bis 6, **dadurch gekennzeichnet, dass** es im Vorfeld des Aufbringens der Mischung aus Glas und Keramik das Aufbringen einer darunterliegenden Schicht aus nichtrostendem Stahl auf das Substrat mittels Plasmaspritzen umfasst.

8. Verfahren zur Beschichtung von Tiegelbereichen nach einem beliebigen der vorhergehenden Ansprüche, **dadurch gekennzeichnet, dass** die Keramik aus Aluminiumoxid, Mullit und Rutil-Aluminiumoxid ausgewählt ist.
